# EUROPÄISCHE PATENTSCHRIFT

(11) **EP 1 562 993 B1**
(45) Veröffentlichungstag und Bekanntmachung des Hinweises auf die Patenterteilung: **11.10.2006**
(21) Anmeldenummer: 03775385.2
(22) Anmeldetag: 21.11.2003
(51) Int. Cl.: C08F 8/14

(54) **LCST-POLYMERE**
LCST POLYMERS
POLYMERES LCST

(30) Priorität: 21.11.2002 DE 10254432
(43) Veröffentlichungstag der Anmeldung: 17.08.2005
(73) Patentinhaber: SÜD-CHEMIE AG, 80333 München (DE)
(72) Erfinder: SCHROD, Matthias, 64859 Eppertshausen (DE)
(74) Vertreter: Westendorp, Michael Oliver
(86) Internationale Anmeldenummer: PCT/EP2003/013099
(87) Internationale Veröffentlichungsnummer: WO 2004/052946

(56) Entgegenhaltungen:
- EP-A- 0 534 016
- EP-A- 0 678 534
- EP-A- 1 072 617
- WO-A-01/60926
- DE-A- 19 601 085
- US-A- 5 147 923

## Beschreibung

Die Erfindung betrifft LCST-(lower critical solution temperature)-Polymere. Unter diesem Begriff versteht man Polymere, die bei einer niedrigen Temperatur in einem flüssigen Medium löslich sind, aber oberhalb einer gewissen Temperatur (der LCST-Temperatur) aus dem flüssigen Medium ausfallen. LCST-Polymere haben unterschiedliche chemische Zusammensetzungen. Die bekanntesten LCST-Polymere sind Polyalkylenoxid-Polymere, z.B. Polyethylenoxid-(PEO)- oder Polypropylenoxid-(PPO)-Polymere, aber auch (PEO)-(PPO)-Copolymere, insbesondere PEO-PPO-PEO-Block-Copolyere. Andere LCST-Polymere sind Poly(N-isopropylacrylmid)-Ethyl-(hydroxyethyl)-cellulose-, Poly(N-vinylcaprolactam)- und Polymethylvinylether)-Derivate.

Die zuerst genannten Polymere sind beispielsweise in der WO 01/60926 A1 beschrieben. Diese Druckschrift betrifft ein Verfahren zur Beschichtung von Substratoberflächen (Partikeloberflächen und nicht-partikuläre Substratoberflächen), mit LCST-Polymeren, bei dem ein LCST-Polymer in einem Lösemittel bei einer Temperatur unterhalb der LCST-Temperatur gelöst, diese Lösung mit den zu beschichteten Substratoberflächen gemischt und die so erhaltene Mischung bis zum Einsetzen der Ablagerung von LCST-Polymeren auf den Substratoberflächen bis über die LCST-Temperatur erhitzt wird. Das abgelagerte LCST-Polymer kann immobilisiert werden, indem es mit funktionellen Gruppen versehen wird, welche eine im wesentlichen irreversible Adsorption an der Substratoberfläche erlauben. Die funktionellen Gruppen können aus Säuregruppen, Hydroxylgruppen, Aminogruppen, Phosphatgruppen, Mercaptangruppen, Siloxangruppen oder hydrophoben Gruppen ausgewählt sein. Ferner können die LCST-Polymeren mit funktionellen Gruppen versehen werden, welche nach der Ablagerung der LCST-Polymeren auf den Partikeln in einer Vernetzungsreaktion die Vernetzung der LCST-Polymeren erlauben. Derartige funktionelle Gruppen können aus Carbonsäuregruppen-Derivaten, Chloroformiat-Gruppen, Aminogruppen, Isocyanatgruppen, Oxirangruppen und/oder radikalisch vernetzbaren Gruppen ausgewählt sein, wobei die Vernetzungsreaktion u.a. durch Änderung des pH-Wertes der Lösung ausgelöst wird.

Die radikalische Vernetzung wird gegenüber der Vernetzung durch Änderung des pH-Wertes weniger bevorzugt. In den Beispielen ist lediglich die Umhüllung von diversen Pigmentpartikeln (TiO₂, Fe₂O₃, Cu-Phthalocyaninblau sowie von Halbleiterwafern mit einer Siliciumdioxidoberfläche) mit PEO-PPO-PEO-Block-Copolymeren angegeben. Eine Fixierung der auf den Substratoberflächen abgeschiedenen Copolymeren ist nicht erläutert.

Die Verwendung von LCST-Polymeren zur Umhüllung von superparamagnetischen Teilchen ist ferner aus der WO 97/45202 bekannt. Diese Teilchen enthalten einen Kern aus einem ersten Polymer, eine innere Schicht aus einem zweiten Polymer, die den Kern überzieht und in welcher ein magnetisches Material dispergiert ist, sowie eine äußere Schicht aus einem dritten Polymer, die die magnetische Schicht überzieht und die in der Lage ist, mit mindestens einem biologischen Molekül zu reagieren, wobei zumindest das zweite Polymer thermoempfindlich ist und eine LCST-Temperatur von 15 bis 65°C hat. Das zweite Polymer wird vorzugsweise durch Polymerisation (1) eines wasserlöslichen Acrylamid-Monomers, wie N-Isopropylacrylamid (NIPAM), (2) mindestens eines Vernetzungsmittels, wie N,N-Methylen-bisacrylamid und (3) mindestens eines funktionellen kationischen und wasserlöslichen Monomers, das sich von dem Monomer (1) unterscheidet, z.B. des Chlorids von 2-Aminoethyl-methacrylat, erhalten. Ein weiteres bevorzugtes Polymer ist [Poly-(N-isopropylacrylamid)] (PNIPAM).

In den "Patent Abstracts of Japan", Vol. 009 Nr. 188 (C295) (1985) Seite 107 = JP 60 058 237 A ist die Einkapselung von anorganischen Teilchen beschrieben. Bezweckt wird die Herstellung einer stabilen Teilchendispersion. Die anorganischen Teilchen werden in Wasser suspendiert und unterhalb der LCST-Temperatur mit einer wässrigen Lösung des LCST-Polymers kontaktiert. Wird die Temperatur des erhaltenen Systems erhöht, so wird auf den anorganischen Teilchen eine Schicht des LCST-Polymers abgeschieden. Der erhaltenen Teilchensuspension wird ein durch Radikalpolymerisation polymerisierbares Monomer, ein Initiator, und gegebenenfalls ein Emulgator zugesetzt, und es wird eine Emulsionspolymerisation durchgeführt, wobei eingekapselte Teilchen erhalten werden. Ferner tritt nun als äußere Schicht die polymerisierte Monomerschicht auf, so dass die Funktion der LCST-Polymerschicht nur darin besteht, das Eindringen von Monomerresten zu erleichtern.

Das polymerisierbare Monomer wird also mit dem bereits auf den Teilchen befindlichen LCST-Polymer umgesetzt bzw. das wasserlösliche Polymer wird mit einer Schicht des aus dem polymerisierbaren Monomer erhaltenen Polymers umhüllt. Dieses Verfahren hat den Nachteil, dass die Anpfropfung nur an den aktiven Zentren des zuvor abgeschiedenen LCST-Polymern stattfindet, wodurch die Umhüllung ungleichmäßig und heterogen ist und keine vollständige Barriere darstellt.

Außerdem muss man der Dispersion der beschichteten Partikel ein Monomer zusetzen, um die Vernetzung zu initiieren. In den meisten Fällen wird das Monomer nie vollständig verbraucht werden, so dass ein gewisser Teil des Monomers in der vernetzten Struktur zurückbleibt. Eine spätere Emission der "gelösten" Monomeren aus dem Polymer ist unerwünscht, da das Monomer gesundheitsschädlich ist.

Weiterhin sind Nachteile im Lacksystem durch die Ablösung des einpolymerisierten Emulgators zu erwarten, wenn das Pigment in Kontakt mit Lösemitteln kommt.

In der WO 92/20441 ist ein Verfahren zur Erzeugung von eingekapselten Teilchen beschrieben, wobei die Teilchen einen Kern enthalten, der von einem Koazervat-Überzug umgeben ist. Bei diesem Verfahren wird eine wässrige Lösung eines LCST-Polymers bei einer Temperatur der reversiblen Insolubilisierung (TRI) von T1, mit einer Dispersion der Teilchen bei einer Temperatur von T2, die niedriger als T1 ist, kontaktiert, worauf die Dispersion auf eine Temperatur oberhalb T1 erhitzt wird, wodurch das LCST-Polymer als Koazervat um die Teilchen abgeschieden wird. Dann wird der Lösung ein Mittel zur Herabsetzung der TRI zugesetzt, wodurch die TRI des LCST-Polymers in der Lösung auf eine Temperatur T3, die niedriger als T1 ist, erniedrigt wird, worauf die Dispersion entweder auf eine Temperatur zwischen T3 und T1 abgekühlt und bei dieser Temperatur gehalten wird, oder die Teilchen bei einer Temperatur von mehr als T3 von der Dispersion abgetrennt werden. Als Mittel zur Herabsetzung der TRI können Elektrolyte und mit Wasser mischbare organische Flüssigkeiten verwendet werden, in denen das LCST-Polymer nicht löslich ist.

Als LCST-Polymere werden bevorzugt synthetische Polymere (Homopolymere oder Copolymere) mit hydrophilen Monomeren verwendet. Geeignete LCST-Monomere sind Acryl- oder Vinylverbindungen. Werden LCST-Copolymere verwendet, so ist das Comonomer gewöhnlich hydrophil und kann nicht-ionisch oder ionisch sein. Geeignete nicht-ionische Monomere sind gewisse Acryl- oder Vinylverbindungen. Anionische oder kationische Monomere sind beispielsweise Acrylsäurederivate bzw. Dialkylaminoalkylacrylate. Diese Verbindungen sind aber an den Enden bereits abgesättigt, so dass keine Vernetzungsreaktionen mehr möglich sind.

LCST-Polymere sind beispielsweise auch aus der EP 0 629 649 A1 bekannt. Sie werden als rheofluidisierende Zusätze und Antiabsetzmittel im Schlitzwandbau, für Bohrungen in der Ölindustrie und als hydraulische Flüssigkeiten und Schmiermittel eingesetzt.

Aus der EP 0 718 327 A2 sind universell verträgliche Pigmentdispergatoren bekannt, die aus Methylmethacrylat und einem Acrylat bzw. Methacrylat zusammengesetzt sind. Diese Polymeren dienen jedoch nur zur Dispersion von Pigmenten, nicht aber zur Umhüllung von Pigmenten.

In der DE 198 02 233 A1 werden Gele mit thermotropen Eigenschaften beschrieben, welche beispielsweise für Verglasungssysteme verwendet werden, um eine Abdunkelung in Abhängigkeit von der Sonneneinstrahlung zu erreichen. Die Gele umfassen ein LCST-Polymer, das aufgebaut ist aus 60-99,9 Gew.-% ethylenisch ungesättigten Laktamen oder Vinylethern (Monomer A), 0-20 Gew.-% ethylenisch ungesättigte, vernetzend wirkende Verbindungen (Monomer (B), 0,1-30 Gew.-% Monomere mit mindestens einer Säure oder Säureanydridgruppe (Monomer C), sowie 0-20 Gew.-% weiteren Monomeren D. Bevorzugt umfasst das LCST-Polymer nur die Monomere A und C, so dass das LCST-Polymer bei Bestrahlung nicht vernetzt wird. Für die Herstellung des Gels wird eine Lösung aus dem LCST-Polymer sowie einem radikalisch polymerisierbaren Monomer (b) hergestellt und mit energiereichem Licht bestrahlt. Das Monomer (b) bildet dabei ein dreidimensionales Netzwerk , d.h. ein Gel, welches in dem gewählten Lösungsmittel oder Lösungsmittelgemisch nicht bzw. kaum löslich ist. In dem aus dem Monomer (b) gebildeten Netzwerk ist das LCST-Polymer eingebunden, sodass ein thermotropes Gel erhalten wird, das sehr weitmaschig vernetzt ist. Das Gel muss zwischen den Glasplatten applizierbar sein und den Zwischenraum zwischen den Glasplatten ausfüllen.

Ein ähnliches Polymersystem wird in der DE 197 19 224 A1 beschrieben. Es wird eine Schichtstruktur beschrieben, in welcher ein thermotropes Polymersystem zwischen einer inneren und einer äußeren, d.h. dem natürlichen Sonnenlicht ausgesetzten, transparenten Glasscheibe angeordnet ist. Das thermotrope Polymersystem wird durch eine UV-Schutzschicht langzeitlich gegen Einwirkung von UV-Licht geschützt. Das thermotrope Polymersystem besteht auch hier aus einem weitmaschig vernetzten Gel.

In der DE 197 00 064 A1 werden Gele mit thermotropen Eigenschaften beschrieben, welche durch Bestrahlung einer Mischung erhalten werden, die ein unvernetztes Polymer, radikalisch polymerisierbare Monomere, Wasser oder ein organisches Lösungsmittel oder deren Gemische sowie mindestens einen speziellen Photoinitiator enthält. Auch hier ist ein LCST-Polymer in eine weitmaschige Gelstruktur eingebunden, welche aus den radikalisch polymerisierbaren Monomeren hergestellt wird. Das Gel soll als thermotrope Schicht in Verglasungssystemen verwendet werden.

In der DE 196 01 085 A1 werden Gele mit thermotropen Eigenschaften beschrieben, die ebenfalls für Verglasungssysteme verwendet werden sollen. Die Gele werden erhalten durch Bestrahlung einer Mischung, enthaltend (a) ein unvernetztes Polymer in Mengen unter 5 Gew.-%, bezogen auf die Summe aus (a), (b) und (c), (b) radikalisch polymerisierbare Monomere und (c) Wasser oder ein organisches Lösungsmittel oder deren Gemische. Auch hier ist das LCST-Polymer in ein aus dem radikalisch polymerisierbaren Monomer gebildeten weitmaschigen Netzwerk eingebunden.

In der DE 196 01 084 A1 werden Gele für thermotrope Schichten beschrieben, die durch Bestrahlen einer Mischung mit energiereichem Licht erhalten werden. Die Mischung enthält ein unvernetztes Polymer mit einem zahlenmittleren Molekulargewicht Mₙ von 1000 bis 30000 g/mol (LCST-Polymer), radikalisch polymerisierbare Monomere sowie Wasser oder ein organisches Lösungsmittel oder deren Gemische. Diese Gele sollen ebenfalls in Verglasungssystemen als thermotrope Schicht verwendet werden. Auch hier wird ein Gel ausgebildet, in dessen weitmaschiger Struktur das LCST-Polymer eingebunden ist.

Bei den zuvor beschriebenen thermotropen Gelen für Verglasungssysteme soll das LCST-Polymer auch im Gel seine thermotropen Eigenschaften behalten, so dass es wiederholt ausgefällt bzw. aufgelöst werden kann, um eine möglichst hohe Zyklenzahl von Abschattung/Aufhellung durchlaufen zu können. Ein solches Gel eignet sich nicht für die Ausbildung von Beschichtungen.

Ein weiteres derartiges System wird in der DE 44 14 088 A1 beschrieben. Auch diese Gele umfassen ein LCST-Polymer, welches in einem Gel eingebunden ist, das durch Polymerisation radikalisch polymerisierbarer Monomere in einem geeigneten Lösungsmittel, wie Wasser oder einem organischem Lösungsmittel, erzeugt wird.

In der EP-A-0 534 016 wird eine Matrix vorgeschlagen, welche als feste Phase in der Flüssigchromatographie eingesetzt werden kann. Die Matrix umfasst zumindest eine in einen wasserunlöslichen Zustand überführte polymere Verbindung, welche LCST-Eigenschaften aufweist und auf Veränderungen der Temperatur reagiert. Die polymere Verbindung wird bevorzugt aus der Gruppe ausgewählt, welche gebildet ist aus Poly-N-substituierten Acrylamidderivaten, Poly-N-substituierten Methacrylamidderivaten, sowie von Copolymeren dieser Verbindungen, und weiter von Polyvinylmethylether und teilweise acetyliertem Polyvinylalkohol. Als hydrophobe Monomere können Acrylat- oder Methacrylatderivate verwendet werden, wie beispielsweise Glycidylmethacrylat.

In der EP-A-1 072 617 werden temperaturempfindliche Polymere beschrieben, welche eine LCST aufweisen, die sich während der Inkubation in einer wässrigen Lösung ändert. Diese temperaturempfindlichen Polymere können dazu verwendet werden, ein System herzustellen, bei welchem die Freisetzung einer aktiven Substanz über die Umgebungstemperatur gesteuert werden kann.

Der Erfindung lag die Aufgabe zugrunde, LCST-Polymere bereitzustellen, die sich beim Abkühlen nicht mehr von einer Substratoberfläche ablösen, sondern damit fest verbunden bleiben. Die Polymeren sollen also ohne Zusätze von Emulgatoren oder Monomeren verwendet werden, so dass aus der definierten Polymerschicht keine Zusatzstoffe herausgelöst werden können.

Diese Aufgabe wird erfindungsgemäß gelöst durch LCST-Polymere, die erhältlich sind durch radikalische Polymerisation von
A) 45,0 bis 99,9 mol-% mindestens eines Monomeren oder Makromonomeren mit der Struktureinheit
   a) N,N-Dialkylacrylamid 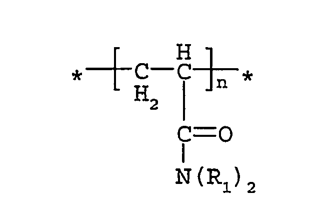 worin n 1 bis 10.000 und R₁ (gleich oder voneinander verschieden) Wasserstoff oder Alkylgruppen mit 1 bis 5 Kohlenstoffatomen bedeuten, und die Reste R₁ auch gemeinsam mit dem Stickstoffatom einen Ring ausbilden können;
   b) N-Vinylcaprolactam 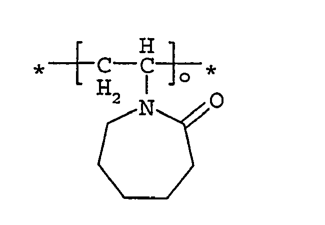 worin o 1 bis 10.000 bedeutet;
   c) N-Vinylpiperidon 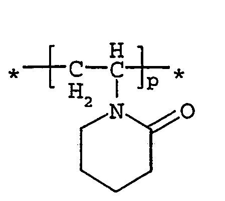 worin p 1 bis 10.000 bedeutet;
   d) N-Vinylpyrrolidon 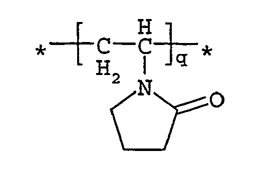 worin q 1 bis 10.000 bedeutet;
   e) Methyl-Vinylether 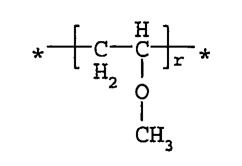 worin r 1 bis 10.000 bedeutet;
   f) und/oder N-Vinyl-alkylamid 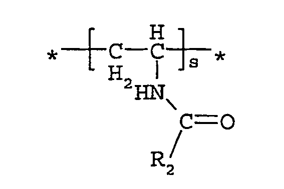 worin s 1 bis 10.000 bedeutet und R₂ eine (Iso)alkylgruppe mit 1 bis 5 Kohlenstoffatomen oder eine Cyclopentylgruppe bedeuten;
B) 0,1 bis 55,0 mol-% eines Comonomeren aus der Gruppe
   a) Maleinsäure, Maleinsäureanhydrid oder eines Alkylesters der Maleinsäure, worin die Alkylgruppe 1 bis 5 Kohlenstoffatome enthält;
   b) Fumarsäure oder eines Alkylesters der Fumarsäure, worin die Alkylgruppe 1 bis 5 Kohlenstoffatome enthält;
   c) Acryl- oder Methacrylsäure oder eines Alkylacrylats oder -methacrylats, worin die Alkylgruppe 1 bis 5 Kohlenstoffatome enthält;
   d) eines Hydroxyalkylacrylats oder -methacrylats, worin die Alkylgruppe 1 bis 5 Kohlenstoffatome enthält;
   e) Vinylacetat;
   f) Glycidyl(meth)acrylat
   g) Allylglycidylether; und/oder
   h) α,α-Dimethyl-meta-isopropenylbenzylisocyanat;
   i) Butadien;
   wobei dass durch Copolymerisation der Monomere oder Makromonomere (A) und (B) erhaltene Polymer durch ein Derivatisierungsagens derivatisiert wird, das zumindest eine Gruppe aufweist, die mit einer Gruppe einer aus dem Comonomer (B) hervorgegangenen Wiederholungseinheit unter Ausbildung einer kovalenten Bindung reagieren kann, sowie zumindest eine polymerisierbare Doppelbindung, wobei ferner, sofern das Comonomer der Gruppe (B) zumindest teilweise durch Butadien gebildet wird, die Derivatisierung mit dem Derivatisierungsagens nicht erfolgen muss.

Unter "Makromonomeren" versteht man Copolymere, die noch weiter polymerisierbar sind, was bei gewissen Copolymeren nicht immer der Fall ist. Diese Makromonomeren umfassen also beispielsweise noch eine reaktionsfähige polymerisierbare Doppelbindung.

Bei der Herstellung der erfindungsgemäßen LCST-Polymeren wird zunächst aus den Monomeren bzw. Makromonomeren (A) und (B) ein Polymer hergestellt, dass meist bereits LCST-Eigenschaften aufweist. Diese Umsetzung wird im allgemeinen in Lösung durchgeführt. In Abhängigkeit von der Löslichkeit des Polymeren können während der Reaktion Trübungen auftreten. Diese beeinflussen die Struktur und die Eigenschaften des Polymers jedoch nicht wesentlich. Für die Herstellung dieses Polymers wird ein geeignetes Lösungsmittel ausgewählt, in welchem sowohl die Monomeren bzw. Makromonomeren (A) und (B) wie auch das Polymer löslich sind, so dass die Reaktion weitgehend homogen verläuft. Geeignet sind beispielsweise Wasser oder Alkohole, wie Methanol, Ethanol oder Isopropanol oder auch Gemische dieser Lösungsmittel. Es können auch aliphatische oder aromatische Lösungsmittel verwendet werden. Aromatische Lösungsmittel sind wegen ihrer besseren Löseeigenschaften bevorzugt. Geeignete aromatische Lösungsmittel sind beispielsweise Toluol oder die Xylole. Die Verwendung aliphatischer oder aromatischer Lösungsmittel ist insbesondere dann bevorzugt, wenn das Polymer reaktive Gruppen für die Derivatisierung umfasst, die mit Wasser oder Alkoholen reagieren können. Es können auch hier Lösungsmittelgemische verwendet werden. Neben den genannten Lösungsmitteln können auch andere Lösungsmittel verwendet werden.

Das in der ersten Stufe hergestellte Polymer kann jeweils nur ein Monomer aus den oben angegebenen Gruppen (A) und (B) umfassen. Es können jedoch auch mehrere Monomere aus den oben angegebenen Gruppen (A) und (B) im Polymer enthalten sein. Entsprechend wird das Polymer durch Co- oder Terpolymerisation erhalten. Polymerisationen mit mehr als drei verschiedenen Monomeren können gegebenenfalls durchgeführt werden.

Die in der Gruppe (A) umfassten Monomere weisen eine unterschiedliche Polarität auf, so dass durch das Verhältnis der einzelnen Monomere (bzw. Makromonomere) die LCST-Temperatur des LCST-Polymers beeinflusst werden kann. So weist das Monomer ((A, d); N-Vinylpyrrolidon) relativ polare Eigenschaften auf und führt zu einer Erhöhung der LCST-Temperatur, während das Monomer ((A, b); N-Vinylcaprolactam) deutlich unpolarere Eigenschaften aufweist, also zu niedrigeren LCST-Temperaturen des LCST-Polymers führt. Bevorzugt wird das Monomer ((A, d); N-Vinylpyrrolidon) zusammen mit einem anderen Monomer der Gruppe (A) verwendet, besonders bevorzugt in Kombination mit einem oder beiden der Monomere ((A, b); N-Vinylcaprolactam) und ((A, c); N-Vinylpiperidon) und insbesondere bevorzugt in Kombination mit dem Monomeren ((A, b); N-Vinylcaprolactam). Der Anteil des Monomers ((A, d); N-Vinylpyrrolidon) an den Monomeren der Gruppe (A) wird dabei bevorzugt zu weniger als 70 Mol-%, insbesondere weniger als 60 Mol-%, und insbesondere bevorzugt weniger als 50 Mol-% gewählt.

Durch die Monomeren der Gruppe (B) werden Gruppen eingeführt, die eine nachträgliche Derivatisierung des Polymers ermöglichen. Die Monomeren der Gruppe B umfassen daher neben einer polymerisierbaren Doppelbindung zumindest eine reaktive Gruppe, die einerseits die Polymerisationsreaktion nicht stört und andererseits im Polymer enthalten bleibt, um eine Reaktion mit einem Derivatisierungsagens zu ermöglichen. Durch die Polarität der Monomeren der Gruppe (B) kann ferner die LCST des LCST-Polymers beeinflusst werden.

Nach der Polymerisation der Monomeren der Gruppen (A) und (B) erfolgt eine Derivatisierung des Polymers, durch welche seitenständige polymerisierbare Doppelbindungen in das Polymer eingeführt werden. Die Verbindungen, mit denen das Polymer derivatisiert wird, weisen zum einen eine polymerisierbare Doppelbindung auf, sowie zum anderen eine reaktive Gruppe, die eine Anknüpfung an das Rückgrat des Polymers ermöglicht. Die Anknüpfung erfolgt dabei über die durch die Monomere B eingeführte reaktive Gruppe. Die Verbindungen weisen bevorzugt ein Molekülgewicht im Bereich von 50 bis 300 auf. Durch die Einführung dieser Verbindungen werden die LCST-Eigenschaften des LCST-Polymers nicht wesentlich beeinflusst. Die reaktive Gruppe des Derivatisierungsagens wird entsprechend zur Gruppe ausgewählt, die mit dem Monomer der Gruppe (B) in das Polymer eingeführt wurde. Ist am Polymer eine Carboxygruppe, eine Carbonsäureestergruppe, eine Carbonsäureanhydridgruppe, eine Epoxygruppe oder eine Isocyanatgruppe vorgesehen, so umfasst das Derivatisierungsagens vorzugsweise eine Hydroxygruppe oder eine Aminogruppe. Zur Derivatisierung werden also vorzugsweise ungesättigte Alkohole oder Amine verwendet. Ist mit dem Monomer der Gruppe (B) eine Hydroxygruppe als reaktive Gruppe in das Polymer eingeführt worden, umfasst das Derivatisierungsargens entsprechend eine Carboxygruppe, eine Carbonsäureestergruppe, eine Carbonsäureanhydridgruppe oder eine andere aktivierte Carbonsäuregruppe, oder auch eine Epoxygruppe oder eine Isocyanatgruppe.

Das LCST-Polymer besitzt nach der Derivatisierung seitenständige Gruppen mit polymerisierbaren Doppelbindungen. Der Vorteil der erfindungsgemäßen LCST-Polymere liegt also darin, dass sie nach der Abscheidung auf einer Oberfläche noch weiter vernetzt werden können, wobei ein sehr hoher Vernetzungsgrad erreicht werden kann.

In einer Ausführungsform des erfindungsgemäßen LCST-Polymers ist zumindest ein Anteil der Monomeren der Gruppe (B) durch Butadien ersetzt. Dies hat den Vorteil, dass die Einführung der seitenständigen polymerisierbaren Doppelbindungen nicht in einem separaten Derivatisierungsschritt erfolgen muss, sondern diese seitenständigen polymerisierbaren Doppelbindungen bereits während der Polymerisation der Monomeren bzw. Makromonomeren der Gruppen (A) und (B) eingeführt werden.

Die Derivatisierung der Struktureinheit aus den Comonomeren (B) (a) bis (c) kann durch Umesterung mit Allylalkohol, Hydroxymethylacrylat, Hydroxymethylmethacrylat, Hydroxyethylacrylat, Hydroxyethylmethacrylat oder 3-Amino-1-propanolvinylether erfolgen.

Die Derivatisierung der Struktureinheiten aus dem Comonomer (B) (d) kann durch Veresterung mit Acrylsäure oder mit Methacrylsäure bzw. durch Umesterung mit C₁-C₁₀-Alkylacrylaten oder -methacrylaten erfolgen.

Die Derivatisierung der Struktureinheit aus dem Comonomer (B) (e) kann durch Umesterung mit Acrylsäure, Methacrylsäure C₁-C₁₀₋Alkylacrylaten oder -methacrylaten erfolgen.

Die Derivatisierung der Struktureinheit aus dem Comonomer (B) (g) und/oder (h) oder dessen OH- oder NH-funktionellen Derivaten kann durch Umsetzung mit (Meth)Acrylsäure erfolgen.

Die Derivatisierung der eine Carbonsäuregruppe umfassenden Struktureinheiten aus dem Comonomer (B) (a) bis (c) kann durch Umsetzung mit Glycidyl(meth)acrylat und/oder Allylglycidylether erfolgen.

Die Derivatisierung von Struktureinheiten aus dem Comonomer B mit OH- und/oder NH-Funktionalitäten kann mit α,α-Dimethylmeta-isopropenylbenzylisocyanat erfolgen. Beispielsweise erfolgt in einer Ausführungsform der Erfindung die Derivatisierung der Struktureinheit aus dem Comonomer (B) (d) durch Umsetzung mit α,α-Dimethyl-meta-isoprapenylbenzylisocyanat.

Für die LCST-Polymeren können keine genauen Formeln angegeben werden, da die Monomeren im Allgemeinen in einer statistischen Verteilung in der Polymerenkette angeordnet sind. Die Polymerenkette kann aber auch aus Blöcken der gleichen Monomeren zusammengesetzt sein.

Es wurde überraschenderweise gefunden, dass die erfindungsgemäßen Polymeren nach der Polymerisation und Derivatisierung der Comonomeren (B) (a) bis (B) (i) irreversibel an der Substratoberfläche immobilisiert werden. Die Immobilisierung ist weit größer als die von LCST-Polymeren, bei denen die Endgruppen beispielsweise aus einfachen Vinylgruppen oder anderen Gruppen mit Doppelbindungen bestehen. Es stehen wesentlich mehr als zwei polymerisierbare Gruppen im Molekül zur Verfügung, um die Polymeren zu immobilisieren. Durch die Anwesenheit von vielen Doppelbindungen wird die Vernetzungsdichte größer als bei nur zwei (endständigen) Gruppen. Ein weiterer Punkt ist, dass durch die engmaschigere Vernetzung (hohe Vernetzungsdichte) die Quellung des auf dem Pigment immobilisierten Polymeren in (wässrigen) Lösemitteln wesentlich geringer ist. Das ist beim Einarbeiten der beschichteten Pigmente in Lacke von großem Vorteil, da weniger Lackfehler, wie Blasenbildung und Quellungen, entstehen.

Die erfindungsgemäßen Polymeren haben gewöhnlich eine LCST im Bereich von 7 bis 70°C, die u.a. von folgenden Faktoren abhängt:
- Molverhältnis der hydrophoben und hydrophilen Anteile des LCST-Polymeren,
- Molmasse des LCST-Polymeren,
- Anzahl der polymerisierbaren und ionisierbaren Gruppen,
- Konzentration des Polymeren,
- pH-Wert und Ionenstärke des Mediums.

Die LCST-Polymere bestehen aus polaren und unpolaren bzw. hydrophilen und hydrophoben Segmenten. Die LCST kann durch Variation dieser einzelnen Segmente sowie der Gesamtkettenlänge gezielt eingestellt werden.

Die erfindungsgemäßen LCST-Polymere lassen sich nach der Polymerisation und Derivatisierung als auf den Substratoberflächen fixierte Dispergiermittel einsetzen. Auf diese Weise verbilligt sich u.a. der kostenintensive Schritt der Pigmentdispergierung, da das Pigment sein Dispergiermittel mit sich trägt. Ferner bilden die so beschichteten Pigmente in einem geringeren Umfang Agglomerate als unbehandelte Pigmente, so dass die Dispergierung leichter durchzuführen ist, was zu einer zusätzlichen Kostenreduzierung führt.

Dispergiermittel sind grenzflächenaktive Substanzen, die das Dispergieren eines pulverförmigen Stoffes, z.B. eines Pigments oder eines Füllstoffes, in einem flüssigen Dispergiermedium erleichtern, indem sie die Grenzflächenspannung zwischen beiden Komponenten erniedrigen. Dadurch erleichtern sie beim Pigmentanreiben das mechanische Aufbrechen der in Form von Agglomeraten vorliegenden Sekundärteilchen in Primärteilchen. Weiterhin schützen sie die gebildeten Primärteilchen durch vollständige Benetzung und Ausbildung einer Schutzkolloid-Hülle oder einer elektrochemischen Doppelschicht gegen Reagglomeration oder Flokkulation.

Da die erfindungsgemäßen LCST-Polymeren im sichtbaren Licht durchsichtig oder durchscheinend sind, können sie eine vollständige Umhüllung von Partikeln bilden, ohne dass dabei die Farbe der Partikel selber beeinflusst wird. Ferner zeigen so beschichtete Pigmente in Lacken die volle Farbstärke, da sie aufgrund der Beschichtung mit LCST-Polymer keine Agglomerate-bilden.

Die erfindungsgemäßen LCST-Polymeren können durch radikalische Polymerisation und anschließende Derivatisierung hergestellt werden. Dabei werden etwa 45,0 bis 99,9 mol-%, vorzugsweise etwa 75 bis 99 mol-% mindestens eines Monomeren oder Oligomeren aus der Gruppe (A) mit etwa 0,1 bis 55,0 mol-%, vorzugsweise etwa 1 bis 25 mol-% des Comonomeren (B) eingesetzt. Die Polymerisation wird bevorzugt in Lösung durchgeführt.

Dabei ist es auch möglich, Mischungen aus den Monomeren (A) und den Comonomeren (B) zu verwenden. Die Herstellung der erfindungsgemäßen Copolymeren kann durch radikalische Polymerisation in wässriger oder alkoholischer Lösung erfolgen. Dabei werden niedermolekulare Alkohole (C₁ bis C₅) bevorzugt, da diese leicht abgezogen werden können. Umfassen die Comonomeren der Gruppe (B) reaktive Gruppen, welche mit Alkoholen oder Wasser reagieren können, beispielsweise eine Epoxygruppe oder eine Isocyanatgruppe, können als Lösungsmittel auch aliphatische oder aromatische Kohlenwasserstoffe verwendet werden, wobei aromatische Kohlenwasserstoffe bevorzugt sind. Geeignete aromatische Lösungsmittel sind beispielsweise Toluol oder Xylol. Die Polymerisation erfolgt in Gegenwart von radikalbildenden Verbindungen, den Polymerisationsinitiatoren, wie organischen Peroxid- oder Azoverbindungen oder anorganischen Peroxidverbindungen. Zur Beeinflussung der Molmasse des erhaltenen Copolymeren werden geeignete Polymerisationsregler, wie Mercaptan, organische Halogenverbindungen oder Aldehyde, zugesetzt. Die Polymerisation wird im Allgemeinen bei Temperaturen von 50 bis 100°C, bevorzugt bei Temperaturen von 60 bis 80 °C, durchgeführt.

Die erfindungsgemäßen LCST-Polymeren können zur Beschichtung von Partikeln und nicht-partikulären Substratoberflächen verwendet werden. Zu den erfindungsgemäß geeigneten Partikeln gehören Pigmente, Füllstoffe und Nanopartikel. Pigmente sind pulver- oder plättchenförmige Farbmittel, die im Gegensatz zu Farbstoffen im umgebenden Medium unlöslich sind (DIN 55943: 1993-11, DIN:EN 971-1: 1996-09). Pigmente beeinflussen oder bestimmen die Farbgebung und werden aus Kostengründen in möglichst geringen Mengen eingesetzt. Aufgrund von Wechselwirkungskräften können die Pigmentteilchen, insbesondere beim Einarbeiten in das Matrixmaterial agglomerieren. Daraus resultieren z.B. im entstehenden Lack Qualitätseinbußen durch u.a. mangelnde Farbstärke, Bodensatzbildung oder Phasenseparierung.

Bevorzugte Pigmente sind Titandioxid, Eisenoxid, Zinkoxid, Ruß, Cu-Phthalocyanin-Pigmente, plättchenförmige Pigmente, wie Glimmer (gegebenenfalls mit oxidischen und metallischen Überzügen) oder Aluminium. Als Füllstoffe können z.B. Bariumsulfat und Talkum verwendet werden. Als Nanopartikel können Eisenoxid-, Titandioxid- und Siliciumdioxidpartikel sowie Nanoclays verwendet werden. Nanoclays bestehen beispielsweise aus Montmorillonit, Bentonit, synthetischem Hectorit oder Hydrotalcit. Sie weisen eine Ausdehnung von weniger als 1 *µ*m entlang ihrer längsten Ausdehnung auf. Bevorzugt weisen sie eine Länge von mehreren 100 nm sowie eine Dicke von weniger als 10 nm auf. Nanoclays besitzen sehr hohe Aspektverhältnisse von bis zu 1000. Zu den Partikeln zählen auch Mikrofasern, wie Glas-, Kohle-, Textil- und Polymerfasern.

Die Substratoberflächen können auch nicht-partikuläre Oberflächen sein, z.B. aus Glas, Metall und Halbleitern. Besonders bevorzugte Oberflächen sind Siliciumdioxid-Wafer, die in der Halbleitertechnik Verwendung finden.

Die erfindungsgemäßen LCST-Polymeren werden vorzugsweise in einem flüssigen Medium (z.B. in einem wässrigen oder organischen Medium) unterhalb der LCST-Temperatur mit den Partikeln bzw. den nicht-partikulären Substratoberflächen kontaktiert, worauf die Temperatur bis über die LCST-Temperatur erhöht wird und die Polymeren über die Doppelbindungen bei dieser oder einer höheren Temperatur auf der Oberfläche der Partikel bzw. auf den nicht-partikulären Substratoberflächen polymerisiert werden.

Gegenstand der Erfindung sind ferner Partikel bzw. nicht-partikuläre Substratoberflächen, die mit dem polymerisierten LCST-Polymer beschichtet sind.

Die Erfindung ist durch die nachstehenden Beispiele erläutert.

### Beispiel 1

### Copolymerisat aus 90 mol-% N,N-Diethylacrylamid und 10 mol-% Maleinsäureanhydrid

In einem 1-Liter-Dreihalskolben, der mit Rührer, Rückflusskühler und Stickstoffzuleitung versehen ist, werden 250 g N,N-Diethylacrylamid, 21,42 g Maleinsäureanhydrid sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren kann durch Veresterung nach dem Stand der Technik erfolgen. Dazu wird das Copolymere in 500 ml Toluol gelöst und mit 25,37 g Allylalkohol gemischt. Die Zugabe des Alkohols kann auch portionsweise oder kontinuierlich während der Reaktion erfolgen. Weiterhin wird die Mischung mit 0,1 bis 5 Gew.-% Veresterungskatalysator (Schwefelsäure, Salzsäure, p-Toluolsulfonsäure, Dodecylbenzolsulfonsäure, (Erd)-akali(hydr)oxide oder Metallalkoholate) versetzt. Die Veresterung wird bei Sumpftemperaturen von 80 bis 120°C durchgeführt. Zur Vermeidung von ungewollten Polymerisationen wird die Umsetzung zweckmäßigerweise in Gegenwart von geringen Mengen handelsüblicher Polymerisationsinhibitoren (z.B. Hydrochinonmonoalkylether, 2,6 Di-t-butylphenol, N-Nitrosamin, Phenothiazin oder Phosphorsäureester) durchgeführt. Diese Verbindungen werden in Mengen von 0,01 bis 2,0%, bezogen auf die Masse des Esters, eingesetzt. Das erhaltene Produkt hat eine LCST von etwa 29°C.

### Beispiel 2

### Copolymerisat aus 90 mol-% N,N-Diethylacrylamid und 10 mol-% Dimethylfumarat

In einem 1-Liter-Dreihalskolben, der mit Rührer, Rückflusskühler und Stickstoffzuleitung versehen ist, werden 250 g N,N-Diethylacrylamid, 31,48 g Dimethylfumarat sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit Allylalkohol unter Verwendung eines Umesterungskatalysators und eines Polymerisationsinhibitors erfolgt wie nach Beispiel 1. Das erhaltene Produkt hat eine LCST von etwa 29°C.

### Beispiel 3

### Copolymerisat aus 90 mol-% N,N-Diethylacrylamid und 10 mol-% Hydroxyethylmethacrylat

In einem 1-Liter-Dreihalskolben, der mit Rührer, Rückflusskühler und Stickstoffzuleitung versehen ist, werden 250 g N,N-Diethylacrylamid, 28,42 g Hydroxyethylmethacrylat sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit 21,87 g Methylmethacrylat (statt Allylalkohol) unter Verwendung eines Umesterungskatalysators und eines Polymerisationsinhibitors erfolgt wie nach Beispiel 1. Das erhaltene Produkt hat eine LCST von etwa 24°C.

### Beispiel 4

### Copolymerisat aus 90 mol-% N,N-Diethylacrylamid und 10 mol-% Butadien

In einem 1-Liter-Dreihalskolben, der mit Rührer, Rückflusskühler und Stickstoffzuleitung versehen ist, werden 250 g N,N-Diethylacrylamid, sowie 8 g Dodecylmercaptan in 500 ml Ethanol gelöst und mit Stickstoff gespült. Hinzu fügt man 2 g Dibenzoylperoxid und erhitzt 12 h auf den Siedepunkt des Ethanols; dabei werden 11,82 g Butadien gasförmig eingeleitet. Zur Isolation des Copolymerisates wird das Lösemittel im Vakuum abgezogen. Das erhaltene Produkt hat eine LCST von 31°C.

### Beispiel 5

### Copolymerisat aus 90 mol-% N-Vinylcaprolactam und 10 mol-% Maleinsäureanhydrid

In einem 1-Liter-Dreihalskolben, der mit Rührer, Rückflusskühler und Stickstoffzuleitung versehen ist, werden 250 g N-Vinylcaprolactam, 19,57 g Maleinsäureanhydrid sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Veresterung mit Allylalkohol unter Verwendung eines Umesterungskatalysators und eines Polymerisationsinhibitors erfolgt wie nach Beispiel 1. Das erhaltene Produkt hat eine LCST von etwa 28°C.

### Beispiel 6

### Copolymerisat aus 90 mol-% N-Vinylcaprolactam und 10 mol-% Dimethylfumarat

In einem 1-Liter-Dreihalskolben, der mit Rührer, Rückflusskühler und Stickstoffzuleitung versehen ist, werden 250 g N-Vinylcaprolactam, 28,76 g Dimethylfumarat sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit Allylalkohol unter Verwendung eines Umesterungskatalysators und eines Polymerisationsinhibitors erfolgt wie nach Beispiel 1. Das erhaltene Produkt hat eine LCST von etwa 28°C.

### Beispiel 7

### Copolymerisat aus 90 mol-% N-Vinylcaprolactam und 10 mol-% Hydroxyethylmethacrylat

In einem 1-Liter-Dreihalskolben, der mit Rührer, Rückflusskühler und Stickstoffzuleitung versehen ist, werden 250 g N-Vinylcaprolactam, 25,97 g Hydroxyethylmethylacrylat sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit 21,87 g Methylmethacrylat unter Verwendung eines Umesterungskatalysators und eines Polymerisationsinhibitors erfolgt wie nach Beispiel 1. Das erhaltene Produkt hat eine LCST von etwa 19°C.

### Beispiel 8

### Copolymerisat aus 90 mol-% N-Vinylcaprolactam und 10 mol-% Butadien

In einem 1-Liter-Dreihalskolben, der mit Rührer, Rückflusskühler und Stickstoffzuleitung versehen ist, werden 250 g N-Vinylcaprolactam und 8 g Dodecylmercaptan in 500 ml Ethanol gelöst und mit Stickstoff gespült. Hinzu fügt man 2 g Dibenzoylperoxid und erhitzt 12 h auf den Siedepunkt des Ethanols. Dabei werden 10,79 g Butadien (gasförmig) eingeleitet. Zur Isolation des Copolymerisates wird das Lösemittel im Vakuum abgezogen. Das erhaltene Produkt hat eine LCST von 30°C.

### Beispiel 9

### Copolymerisat aus 90 mol-% Methylvinylether und 10 mol-% Maleinsäureanhydrid

In einem 1-Liter-Dreihalskolben, der mit Rührer, Rückflusskühler und Stickstoffzuleitung versehen ist, werden 250 g Methylvinylether, 46,9 g Maleinsäureanhydrid sowie 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Veresterung mit Allylalkohol unter Verwendung eines Umesterungskatalysators und eines Polymerisationsinhibitors erfolgt wie nach Beispiel 1. Das erhaltene Produkt hat eine LCST von etwa 25°C.

### Beispiel 10

### Copolymerisat aus 90 mol-% Methylvinylether und 10 mol-% Dimethylfumarat

In einem 1-Liter-Dreihalskolben, der mit Rührer, Rückflusskühler und Stickstoffzuleitung versehen ist, werden 250 g Methylvinylether, 68,93 g Dimethylfumarat und 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit Allylalkohol unter Verwendung eines Umesterungskatalysators und eines Polymerisationsinhibitors erfolgt wie nach Beispiel 1. Das erhaltene Produkt hat eine LCST von etwa 25°C.

### Beispiel 11

### Copolymerisat aus 90 mol-% Methylvinylether und 10 mol-% Hydroxyethylmethacrylat

In einem 1-Liter-Dreihalskolben, der mit Rührer, Rückflusskühler und Stickstoffzuleitung versehen ist, werden 250 g Methylvinylether, 62,24 g Hydroxyethylmethacrylat und 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit 21,87 g Methylmethacrylat unter Verwendung eines Umesterungskatalysators und eines Polymerisationsinhibitors erfolgt wie nach Beispiel 1. Das erhaltene Produkt hat eine LCST von etwa 16°C.

### Beispiel 12

### Copolymerisat aus 90 mol-% N-Vinylcaprolactam und 10 mol-% Butadien

In einem 1-Liter-Dreihalskolben, der mit Rührer, Rückflusskühler und Stickstoffzuleitung versehen ist, werden 250 g N-Vinylcaprolactam und 8 g Dodecylmercaptan in 500 ml Ethanol gelöst und mit Stickstoff gespült. Hinzu fügt man 2 g Dibenzoylperoxid und erhitzt 12 h auf den Siedepunkt des Ethanols. Dabei werden 10,79 g Butadien (gasförmig) eingeleitet. Zur Isolation des Copolymerisates wird das Lösemittel im Vakuum abgezogen. Das erhaltene Produkt hat eine LCST von 24°C.

### Beispiel 13

### Copolymerisat aus 90 mol-% N-Vinyl-n-butyramid und 10 mol-% Maleinsäureanhydrid

N-Vinylalkylamide, wie das N-Vinyl-n-butyramid, werden durch eine zweistufige Reaktion hergestellt. Dazu werden 1 mol Acetaldehyd, 1 mol Isopropanol und 1 mol n-Butyramid in Gegenwart von katalytischen Mengen konzentrierter Schwefelsäure bei 500°C zu N-Vinyl-n-butyramid pyrolisiert. Der genaue Mechanismus ist bei K. Suwa, Y. Wada, Y. Kikunaga, K. Morishita, A. Kishida, M. Akashi, *J. Plym. Sci., Part A: Plym. Chem. Ed.,* 35, 1763 (1997) angegeben.

In einem 1-Liter-Dreihalskolben, der mit Rührer, Rückflusskühler und Stickstoffzuleitung versehen ist, werden 250 g N-Vinyl-n-butyramid, 24,08 g Maleinsäureanhydrid und 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Veresterung mit Allylalkohol unter Verwendung eines Umesterungskatalysators und eines Polymerisationsinhibitors erfolgt wie nach Beispiel 1. Das erhaltene Produkt hat eine LCST von etwa 29°C.

### Beispiel 14

### Copolymerisat aus 90 mol-% N-Vinyl-n-butyramid und 10 mol-% Dimethylfumarat

In einem 1-Liter-Dreihalskolben, der mit Rührer, Rückflusskühler und Stickstoffzuleitung versehen ist, werden 250 g N-Vinyl-n-butyramid, 35,39 g Dimethylfumarat und 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit Allylalkohol unter Verwendung eines Umesterungskatalysators und eines Polymerisationsinhibitors erfolgt wie nach Beispiel 1. Das erhaltene Produkt hat eine LCST von etwa 29°C.

### Beispiel 15

### Copolymerisat aus 90 mol-% N-Vinyl-n-butyramid und 10 mol-% Hydroxyethylmethacrylat

In einem 1-Liter-Dreihalskolben, der mit Rührer, Rückflusskühler und Stickstoffzuleitung versehen ist, werden 250 g N-Vinyl-n-butyramid, 31,95 g Hydroxyethylmethacrylat und 8 g Dodecylmercaptan in 500 ml Toluol gelöst und mit Stickstoff gespült. Hinzu fügt man 2 g Dibenzoylperoxid und erhitzt 12 h auf den Siedepunkt des Toluols. Zur Isolation des Copolymerisates wird das Lösemittel im Vakuum abgezogen.

Die Modifizierung des Copolymeren durch Umesterung mit 21,87 g Methylmethacrylat unter Verwendung eines Umesterungskatalysators und eines Polymerisationsinhibitors erfolgt wie nach Beispiel 1. Das erhaltene Produkt hat eine LCST von etwa 24°C.

### Beispiel 16

### Copolymerisat aus 90 mol-% N-Vinyl-n-butyramid und 10 mol-% Butadien

In einem 1-Liter-Dreihalskolben, der mit Rührer, Rückflusskühler und Stickstoffzuleitung versehen ist, werden 250 g N-Vinyl-n-butyramid sowie 8 g Dodecylmercaptan in 500 ml Ethanol gelöst und mit Stickstoff gespült. Hinzu fügt man 2 g Dibenzoylperoxid und erhitzt 12 h auf den Siedepunkt des Ethanols. Dabei werden 13,28 g Butadien (gasförmig) eingeleitet. Zur Isolation des Copolymerisates wird das Lösemittel im Vakuum abgezogen. Das erhaltene Produkt hat eine LCST von 30°C.

### Beispiel 17

### Copolymerisat aus 50 Mol-% Vinylcaprolactam, 45 Mol-% Vinylpyrrolidin und 5 Mol-% Glycidylmethacrylat und anschließende Modifizierung mit 5 Mol-% Methacrylsäure

In einem 2-Liter-Dreihalskolben, der mit Rührer, Rückflusskühler und Stickstoffzuleitung versehen ist, werden 138,2 g N-Vinylcaprolactam und 50,9 g N-Vinylpyrrolidon in 600 ml Toluol gelöst, mit Stickstoff gespült und auf den Siedepunkt des Toluols erhitzt. Zu dieser Lösung tropft man ein Gemisch aus 10,9 g Glycidylmethacrylat und 2,5 g Azobisisobutyronitril in 80 ml Ethanol und rührt das Reaktionsgemisch für weitere fünf Stunden bei gleicher Temperatur. Die Modifizierung des Copolymeren erfolgt durch Umsetzung des Copolymeren mit 6,6 g Methacrylsäure bei ca. 80 °C für weitere fünf Stunden. Die Zugabe der Säure kann auch portionsweise oder kontinuierlich während der Reaktion erfolgen. Das erhaltene Produkt hat eine LCST von etwa 46 °C.

### Beispiel 18

### Copolymerisat aus 50 Mol-% Vinylcaprolactam, 45 Mol-% Vinylpyrrolidin und 5 Mol-% Methacrylsäure und anschließende Modifizierung mit 5 Mol-% Glycidylmethacrylat

In einem 2-Liter-Dreihalskolben, der mit Rührer, Rückflusskühler und Stickstoffzuleitung versehen ist, werden 138,2 g N-Vinylcaprolactam und 50,9 g N-Vinylpyrrolidon in 600 ml Toluol gelöst, mit Stickstoff gespült und auf den Siedepunkt des Toluols erhitzt. Zu dieser Lösung tropft man ein Gemisch aus 6,6 g Methacrylsäure und 2,5 g Azobisisobutyronitril in 80 ml Ethanol und rührt das Reaktionsgemisch für weitere fünf Stunden bei gleicher Temperatur. Die Modifizierung des Copolymeren erfolgt durch Umsetzung des Copolymeren mit 10,9 g Glycidylmethacrylat bei ca. 80 °C für weitere fünf Stunden. Die Zugabe des Methacrylats kann auch portionsweise oder kontinuierlich während der Reaktion erfolgen. Das erhaltene Produkt hat eine LCST von etwa 48 °C.

### Beispiel 19

### Copolymerisat aus 50 Mol-% Vinylcaprolactam, 45 Mol-% Vinylpyrrolidon und 5 Mol-% α,α-Dimethyl-metaisopropenylbenzylisocyanat und anschließende Modifizierung mit 5 Mol-% Hydroxyethylmethacrylat

In einem 2-Liter-Dreihalskolben, der mit Rührer, Rückflusskühler und Stickstoffzuleitung versehen ist, werden 135,2 g N-Vinylcaprolactam, 49,8 g N-Vinylpyrrolidon und 15,0 g α,α-Dimethylmeta-isopropenylbenzylisocyanat in 600 ml Toluol gelöst, mit Stickstoff gespült und auf den Siedepunkt des Toluols erhitzt. Zu dieser Lösung tropft man eine Lösung von 2,5 g Azobisisobutyronitril in 80 ml Toluol und rührt das Reaktionsgemisch für weitere fünf Stunden bei gleicher Temperatur. Die Modifizierung des Copolymeren erfolgt durch Umsetzung des Copolymeren mit 10,9 g Hydroxyethylmetacrylat bei ca. 80 °C für weitere fünf Stunden. Die Zugabe der Säure kann auch portionsweise oder kontinuierlich während der Reaktion erfolgen. Das erhaltene Produkt hat eine LCST von etwa 50 °C.

### Beispiel 20

### Copolymerisat aus 50 Mol-% Vinylcaprolactam, 45 Mol-% Vinylpyrrolidon und 5 Mol-% Hydroxyethylmethacrylat und anschließende Modifizierung mit 5 Mol-% α,α-Dimethyl-metaisopropenylbenzylisocyanat

In einem 2-Liter-Dreihalskolben, der mit Rührer, Rückflusskühler und Stickstoffzuleitung versehen ist, werden 135,2 g N-Vinylcaprolactam, 49,8 g N-Vinylpyrrolidon und 10,9 g Hydroxyethylmethacrylat in 600 ml Toluol gelöst, mit Stickstoff gespült und auf den Siedepunkt des Toluols erhitzt. Zu dieser Lösung tropft man eine Lösung von 2,5 g Azobisisobutyronitril in 80 ml Toluol und rührt das Reaktionsgemisch für weitere fünf Stunden bei gleicher Temperatur. Die Modifizierung des Copolymeren erfolgt durch Umsetzung des Copolymeren mit 15,0 g α,α-Dimethyl-meta-isopropenylbenzylisocyanat bei ca. 80 °C für weitere fünf Stunden. Die Zugabe des Isocyanats kann auch portionsweise oder kontinuierlich während der Reaktion erfolgen. Das erhaltene Produkt hat eine LCST von etwa 50 °C.

### Beispiel 21 (Vergleich)

### LCST-Polymer mit nur zwei funktionellen Gruppen zur Immobilisierung auf dem Partikel

### a) Darstellung der Initiatorlösung:

In einem 2-Liter-Dreihalskolben mit Rückflusskühler, dem ein Trockenröhrchen aufgesetzt ist, und Stickstoffzuleitung werden 1000 ml mehrmals über Natrium destilliertes Tetrahydrofuran, 40 g Naphthalin und 6 g Natriumschnitzel bei 20°C unter einer absolut trockenen Stickstoffatmosphäre gerührt. Das Natrium geht im Verlaufe von 2 h unter Bildung der tiefgrün gefärbten Additionsverbindung in Lösung. Die dargestellte Lösung ist hiernach 0,25 molar, bezogen auf Natrium.

### b) Ausführung der Polymerisation:

Die nachfolgenden Operationen müssen ebenfalls unter sorgfältigem Ausschluss von Luft und Feuchtigkeit durchgeführt werden.

In einem 1-Liter Dreihalskolben bringt man unter einer Reinstickstoffatmosphäre 300 ml frisch über Natrium destilliertes Tetrahydrofuran. Dann überführt man 20 ml der Naphthalinnatriumlösung aus a) in einen dem Kolben aufgesetzten Tropftrichter und entfernt durch einige Tropfen dieser Lösung die letzten Verunreinigungen im Kolben. Sobald die grüne Farbe erhalten bleibt, lässt man 500 ml dieser 0,25 m Lösung zulaufen. Unter starkem Rühren tropft man anschließend im Verlauf von 30 min eine Lösung von 317 g N,N-Diethylacrylamid (2,5 mol) in 1000 ml Tetrahydrofuran zu. Die Lösung verfärbt sich sofort. Durch Außenkühlung hält man die Temperatur auf 15 bis 20°C, wobei das zugetropfte N,N-Diethylacrylamid praktisch in wenigen Sekunden polymerisiert. Nach beendeter N,N-Diethylacrylamidzugabe wird die Polymerisation durch Zugabe eines Überschusses von 12 g Acrylsäurechlorid abgebrochen. Zur Aufarbeitung wird das Reaktionsgemisch mit 10 ml Methanol versetzt, ehe das Lösemittel abgezogen wird. Das erhaltene Produkt hat eine mittlere Molmasse von etwa 4700 g/mol und eine LCST von etwa 39°C.

### Beispiel 22 (Vergleich)

### LCST-Polymer mit zwei funktionellen Gruppen zur Immobilisierung auf dem Partikel

Die Polymerisation von 348 g (2,5 mol) N-Vinylcaprolactam erfolgt analog zu der des N,N-Diethylacrylamids von Beispiel 21. Das erhaltene Produkt hat eine mittlere Molmasse von etwa 5700 g/mol und eine LCST von etwa 32°C.

### Beispiel 23 (Vergleich)

### LCST-Polymer mit zwei funktionellen Gruppen zur Immobilisierung auf dem Partikel

Die Polymerisation von 145 g (2,5 mol) Methylvinylether erfolgt analog zu der des N,N-Diethylacrylamids von Beispiel 21. Das erhaltene klebrige Produkt hat eine mittlere Molmasse von etwa 2500 g/mol und eine LCST von etwa 28 bis 30°C.

### Anwendungsbeispiele

Ein Perlglanzpigment (Iriodin Afflair® 504, Hersteller Merck KgaA, Darmstadt) wird mit den LCST-Polymeren nach den Produktvarianten aus den Beispielen belegt. Zur Untersuchung der Wirksamkeit der polymeren Belegung von Partikeln hat sich die Anwendung von plättchenförmigen Perlglanzpigmenten bewährt. Dazu wird die Wasseraufnahme eines Lackes, der die erfindungsgemäß beschichteten Perlglanzpigmente enthält, bestimmt. Von Interesse ist hierbei der Vergleich zwischen den hoch- und den niedrig- bzw. nicht-vernetzten Polymerbeschichtungen.

### Anwendungsbeispiel 1

Für die Behandlung von Iriodin Afflair® 504 mit dem LCST-Polymer von Beispiel 1 wird eine 0,5%-ige Polymerlösung verwendet. Das Pigment (10 Gew.-%) wird bei 800 U/min 15 min in Wasser dispergiert. Die Dispersion wird anschließend auf eine Temperatur von 10°C abgekühlt. Nach der Zugabe der Polymerlösung wird das Pigment bei 40°C 30 min mit dem Polymer belegt, und das ausgefällte Polymer wird dann 3 h vernetzt. Als Initiatorsystem kommen pro Gramm Polymer 0,8 g Natriumpyrosulfit, 0,4 g Eisen(II)sulfat und 0,8 g Kaliumperoxodisulfat zum Einsatz. Die Polymerkonzentration, bezogen auf Pigment, betrug 5 Gew.-%.

### Anwendungsbeispiel 2

In ähnlicher Weise erfolgt die Behandlung von Iridion Afflair® mit dem LCST-Polymer von Beispiel 2, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 3

In ähnlicher Weise erfolgt die Behandlung von Iriodin Afflair® 504 mit dem LCST-Polymer von Beispiel 3, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 4

In ähnlicher Weise erfolgt die Behandlung von Iriodin Afflair® 504 mit dem LCST-Polymer von Beispiel 4, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 5

In ähnlicher Weise erfolgt die Behandlung von Iriodin Afflair® 504 mit dem LCST-Polymer von Beispiel 5, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 6

In ähnlicher Weise erfolgt die Behandlung von Iriodin Afflair® 504 mit dem LCST-Polymer von Beispiel 6, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 7

In ähnlicher Weise erfolgt die Behandlung von Iriodin Afflair® 504 mit dem LCST-Polymer von Beispiel 7, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 8

In ähnlicher Weise erfolgt die Behandlung von Iriodin Afflair® 504 mit dem LCST-Polymer von Beispiel 8, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 9

In ähnlicher Weise erfolgt die Behandlung von Iriodin Afflair® 504 mit dem LCST-Polymer von Beispiel 9, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 10

In ähnlicher weise erfolgt die Behandlung von Iriodin Afflair® 504 mit dem LCST-Polymer von Beispiel 10, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 11

In ähnlicher Weise erfolgt die Behandlung von Iriodin Afflair® 504 mit dem LCST-Polymer von Beispiel 11, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 12

In ähnlicher Weise erfolgt die Behandlung von Iriodin Afflair® 504 mit dem LCST-Polymer von Beispiel 12, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 13

In ähnlicher Weise erfolgt die Behandlung von Iriodin Afflair® 504 mit dem LCST-Polymer von Beispiel 13, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 14

In ähnlicher Weise erfolgt die Behandlung von Iriodin Afflair® 504 mit dem LCST-Polymer von Beispiel 14, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 15

In ähnlicher Weise erfolgt die Behandlung von Iriodin Afflair® 504 mit dem LCST-Polymer von Beispiel 15, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 16

In ähnlicher Weise erfolgt die Behandlung von Iriodin Afflair® 504 mit dem LCST-Polymer von Beispiel 16, wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 17

In ähnlicher Weise erfolgt die Behandlung von Iriodin Afflair® 504 mit dem LCST-Polymer von Beispiel 17, wobei die Temperatur der Pigmentdispersion von 10°C bis auf 55°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 18

In ähnlicher Weise erfolgt die Behandlung von Iriodin Afflair® 504 mit dem LCST-Polymer von Beispiel 18, wobei die Temperatur der Pigmentdispersion von 10°C bis auf 55°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 19

In ähnlicher Weise erfolgt die Behandlung von Iriodin Afflair® 504 mit dem LCST-Polymer von Beispiel 19, wobei die Temperatur der Pigmentdispersion von 10°C bis auf 55°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 20

In ähnlicher Weise erfolgt die Behandlung von Iriodin Afflair® 504 mit dem LCST-Polymer von Beispiel 20, wobei die Temperatur der Pigmentdispersion von 10°C bis auf 55°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 21 (Vergleich)

In ähnlicher Weise erfolgt die Behandlung von Iriodin Afflair® 504 mit dem LCST-Polymer nach dem Beispiel 21 (Vergleich), das nur zwei polymerisierbare Gruppen zur Immobilisierung jeweils an den Enden des Polymers aufweist. Dabei wird die Temperatur der Pigmentdispersion von 10°C bis auf 45°C zur Belegung des Pigments erhöht. Die Vernetzung der Polymerschicht erfolgt unter Verwendung des Polymerisationsinitiators von Anwendungsbeispiel 1 über einen Zeitraum von 3 h.

### Anwendungsbeispiel 22 (Vergleich)

In ähnlicher Weise erfolgt die Behandlung von Iriodin Afflair® 504 mit dem LCST-Polymer nach dem Beispiel 22 (Vergleich), das nur zwei polymerisierbare Gruppen zur Immobilisierung jeweils an den Enden des Polymers aufweist. Dabei wird die Temperatur der Pigmentdispersion von 10°C bis auf 45°C zur Belegung des Pigments erhöht. Die Vernetzung der Polymerschicht erfolgt unter Verwendung des Polymerisationsinitiators von Anwendungsbeispiel 1 über einen Zeitraum von 3 h.

### Anwendungsbeispiel 23 (Vergleich)

In ähnlicher Weise erfolgt die Behandlung von Iriodin Afflair® 504 mit dem LCST-Polymer nach dem Beispiel 23 (Vergleich), das nur zwei polymerisierbare Gruppen zur Immobilisierung jeweils an den Enden des Polymers aufweist. Dabei wird die Temperatur der Pigmentdispersion von 10°C bis auf 45°C zur Belegung des Pigments erhöht. Die Vernetzung der Polymerschicht erfolgt unter Verwendung des Polymerisationsinitiators von Anwendungsbeispiel 1 über einen Zeitraum von 3 h.

### Anwendungsbeispiel 24 (Vergleich)

In ähnlicher Weise erfolgt die Beschichtung von Iriodin Afflair® 504 mit einem PEO-PPO-PEO Blockcopolymer von 4400 g/mol und einer LCST-Temperatur von 8°C (erhältlich von der Firma Aldrich). Dabei wird die Temperatur der Pigmentdispersion von 5°C bis auf 20°C zur Belegung des Pigments erhöht. Die Vernetzung der Polymerschicht erfolgt unter Verwendung des Polymerisationsinitiators von Anwendungsbeispiel 1 über einen Zeitraum von 3 h.

Die Pigmentproben wurden wie folgt getestet:

### Wasser-Immersionstest:

Für den Test wurde ein konventionelles Lacksystem für Automobillacke folgender Zusammensetzung verwendet:

| **Produkt** | **Gewichtsanteil** | **Hersteller** |
|---|---|---|
| Effektpigment | 61,0 | |
| Butylacetat | 61,0 | |
| Xylol | 35,5 | |
| Cerafak 106 | 120,0 | BYK Cera bv |
| | | |
| Setal 90173 SS-50 | 320,0 | Akzo Nobel Resins |
| Dow Corning 56 | 7,0 | Dow Corning |
| Byik P104 S | 0,5 | BYK Chemie GmbH |
| | | |
| CAB 381-0.5 | 360 | Eastman Chemicals |
| Butylacetet | 35,0 | |

Die Pigmentproben wurden in das Lacksystem eingearbeitet und die Prüfproben als Folien mit dem Rakel (500 µm Schichtdicke) hergestellt. Die Prüfung erfolgte im Einschichtsystem nach 16 Stunden bei 66°C und nach 20 Stunden bei 80°C. Dabei werden die Prüfproben zur Hälfte in destilliertes Wasser eingetaucht. Die visuelle Beurteilung der Graufärbung nach Bewitterung erfolgte nach ISO 105-A02 24 Stunden nach Belastungsende. Die Beurteilungsskala reicht von 5 (sehr gut) bis 1 (sehr schlecht).

### Kondenswasserprüfung:

Für den Test wurde ein Wasserlacksystem folgender Zusammensetzung verwendet:

| **Produkt** | **Gewichtsanteil** | **Hersteller** |
|---|---|---|
| Teil 1: | | |
| Setalux 6802 | 480 | Akzo Nobel Resins |
| Setamine MS 155 AQ-80 | 47 | Akzo Nobel Resins |
| Butylglykol | 41 | |
| entionisiertes Wasser | 255 | |
| Dimethylethanolamin (10%) | 10 | |
| | | |

| Teil 2: | | |
|---|---|---|
| Effektpigment | 37,5 | |
| Butylglykol | 33,0 | |
| Setal 6306 SS-60 | 31,5 | Akzo Nobel Resins |
| Dimethylethanolamin | 1,0 | |
| | | |
| Setal 6407 SQ-26 | 64 | Akzo Nobel Resins |
| | | |
| Dimethylethanolamin | Menge unterschiedlich (pH-Wert der Mischung von ca. 7,8) | |
| Latekoll D oder | | BASF AG |
| entionisiertes Wasser | Menge unterschiedlich (Viskosität der Mischung von ca. 28 s DIN Cup 4) | |

Die Pigmentproben wurden auch in das Wasserlacksystem eingearbeitet und die Prüfproben als Folien mit dem Rakel (500 µm Schichtdicke) hergestellt. Die Prüfung erfolgte nach DIN 50017 (Kondenswasser-Konstantklimate) 10 min bis eine Stunde nach Belastungsende.

Die Beurteilung des Blasengrades erfolgte visuell nach DIN 53209. Die Bewertungsskala reicht von 0 (sehr gut) bis 5 (sehr schlecht).

Die Beurteilung des Quellungsvorganges erfolgte visuell in Anlehnung an DIN 53230. In der relativen Bewertungsskala bedeutet die Kennzahl 0: "nicht verändert" und die Kennzahl 5: "stark verändert".

Die Nullprobe zeigt, dass auch ein reines Wasserlacksystem, d.h. ohne Pigmentanteil, ebenfalls Wasser aufnimmt und geringe Quellungen auftreten.

Der Vergleich der Messergebnisse in Tabelle 1 zeigt deutlich, dass die erfindungsgemäß beschichteten Pigmente in Wasserlacksystemen eine höhere Stabilität aufweisen als die Pigmente, die mit den Vergleichspolymeren (Bsp. 21, 22, 23, 24) beschichtet sind. Die engmaschigere Vernetzung der erfindungsgemäßen Polymeren führt zu einer höheren Barrierewirkung, so dass das Eindringen von Wasser in das Beschichtungspolymer effektiv verhindert wird.

**Tabelle I**

| Beispiel | Wasser-Immersions-Test | | Kondenswassertest |
|---|---|---|---|
| | 16h/66°C | 20h/80°C | |
| 1 | 5-4 | 4-5 | 1,1 |
| 2 | 5 | 5-4 | 1,0 |
| 3 | 5-4 | 4 | 1,0 |
| 4 | 5 | 5-4 | 1,1 |
| 5 | 5 | 5-4 | 1,2 |
| 6 | 5 | 5-4 | 1,1 |
| 7 | 5 | 4 | 1,1 |
| 8 | 5 | 5-4 | 1,0 |
| 9 | 5 | 5-4 | 1,2 |
| 10 | 5 | 4-5 | 1,2 |
| 11 | 5 | 4-5 | 1,0 |
| 12 | 5 | 5-4 | 1,1 |
| 13 | 5-4 | 4 | 1,1 |
| 14 | 5 | 5-4 | 1,1 |
| 15 | 5-4 | 4 | 1,0 |
| 16 | 5 | 5-4 | 1,0 |
| 17 | 5-4 | 5-4 | 1,1 |
| 18 | 5 | 5-4 | 1,0 |
| 19 | 5-4 | 5 | 1,0 |
| 20 | 5 | 5-4 | 1,1 |
| 21 (Vergleich) | 4-5 | 4 | 1,9 |
| 22 (Vergleich) | 4-5 | 4-3 | 1,6 |
| 23 (Vergleich) | 5-4 | 4 | 2,1 |
| 24 (Vergleich) | 4 | 4-3 | 2,8 |
| Nullprobe | | | 1,2 |

### Anwendungsbeispiel 25

Ein Halbleiterwafer mit einer Siliciumdioxidoberfläche der Größe 1 x 1 cm wird in 3 ml destilliertem Wasser eingetaucht. Es wird auf 10°C abgekühlt, worauf 0,2 ml einer 10 gew.-%igen LCST-Copolymerlösung von Beispiel 1 zugegeben werden. Nach zwei Stunden bei 10°C wird innerhalb einer Stunde auf 40°C erwärmt. Danach wird wiederum auf 10°C abgekühlt, allerdings nur für die Dauer von 10 min, und innerhalb einer Stunde auf 40°C erwärmt. Dieser Zyklus des Abkühlens und Erwärmens wird insgesamt dreimal durchgeführt. Nach dem letzten Zyklus verbleibt der Wafer noch 24 Stunden bei 40°C im flüssigen Beschichtungsmedium und wird nachher mit destilliertem Wasser abgespült. Die Polymerschicht wird anschließend thermoinduziert vernetzt; dazu wird der Wafer in einem Trockenschrank bei Temperaturen von 70 bis 100°C fünf Stunden getempert. Eine andere Möglichkeit, die Polymerschicht zu vernetzen, besteht darin, den beschichteten Wafer fünf Stunden mit intensivem sichtbaren Licht zu bestrahlen.

In ähnlicher Weise erfolgt die Behandlung des Siliciumwafers mit dem LCST-Polymer nach den Beispielen 2 bis 16, wobei der Temperaturbereich der Polymerlösung im Beschichtungsprozess denen der jeweiligen Anwendungsbeispiele entspricht. Der Vernetzungsvorgang erfolgt in gleicher Weise wie beim Polymer von Beispiel 1.

Der durch das vorstehend beschriebene Verfahren mit dem LCST-Polymer beschichtete Halbleiterwafer besitzt eine stärker hydrophobe Oberfläche als eine Wafer ohne Beschichtung. Experimentell kann dies durch auf die Oberfläche aufgebrachte Wassertropfen dokumentiert werden. Die beschichtete und somit hydrophobere Oberfläche wird weniger gut vom Wasser benetzt als die unmodifizierte Oberfläche. Der Wassertropfen perlt von dem beschichteten Wafer ab; auf der nicht modifizierten Oberfläche breitet sich der Tropfen aus.

## Patentansprüche

1. LCST-Polymere, erhältlich durch radikalische Co- oder Terpolymerisation in Lösung von
A) 45,0 bis 99,9 mol-% mindestens eines Monomeren oder Makromonomeren mit der Struktureinheit
a) N,N-Dialkylacrylamid 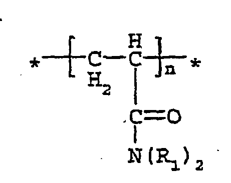 worin n 1 bis 10.000 und R₁ (gleich oder voneinander verschieden) Wasserstoff oder Alkylgruppen mit 1 bis 5 Kohlenstoffatomen bedeuten, wobei die Reste R₁ auch gemeinsam mit dem Stickstoffatom einen Ring ausbilden können;
b) N-vinylcaprolactam 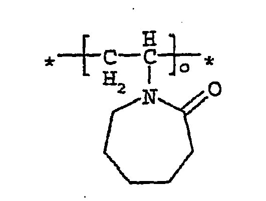 worin o 1 bis 10.000 bedeutet;
c) N-Vinylpiperidon 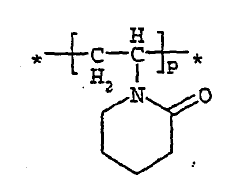 worin p 1 bis 10.000 bedeutet;
d) N-Vinylpyrrolidon 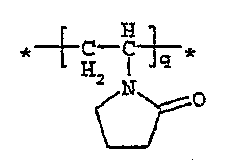 worin q 1 bis 10.000 bedeutet;
e) Methyl-Vinylether 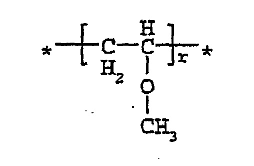 worin r 1 bis 10.000 bedeutet;
f) und/oder N-Vinyl-alkylamid 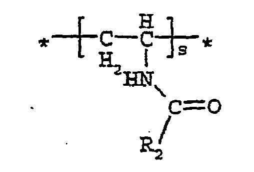 worin s 1 bis 10.000 bedeutet und R₂ eine (Iso)alkylgruppe mit 1 bis 5 Kohlenstoffatomen bedeuten;
B) 0,1 bis 55,0 mol-% eines Comonomeren aus der Gruppe
a) Maleinsäure, Maleinsäureanhydrid oder eines Alkylesters der Maleinsäure, worin die Alkylgruppe 1 bis 5 Kohlenstoffatome enthält;
b) Fumarsäure oder eines Alkylesters der Fumarsäure, worin die Alkylgruppe 1 bis 5 Kohlenstoffatome enthält;
c) Acryl- oder Methacrylsäure oder eines Alkylacrylats oder -methacrylats, worin die Alkylgruppe 1 bis 5 Kohlenstoffatome enthält;
d) eines Hydroxyalkylacrylats oder -methacrylats, worin die Alkylgruppe 1 bis 5 Kohlenstoffatome enthält;
e) Vinylacetat;
f) Glycidyl(meth)acrylat
g) Allylglycidylether; und/oder
h) α,α-Dimethyl-meta-isopropenylbenzylisocyanat;
i) Butadien;
wobei das durch Copolymerisation der Monomere oder Makromonomere (A) und (B) erhaltene Polymer durch ein Derivatisierungsagens derivatisiert wird, das zumindest eine Gruppe aufweist, die mit einer Gruppe einer aus dem Comonomer (B) hervorgegangenen Wiederholungseinheit unter Ausbildung einer kovalenten Bindung reagieren kann, sowie zumindest eine polymerisierbare Doppelbindung, wobei ferner, sofern das Comonomer der Gruppe (B) zumindest teilweise durch Butadien gebildet wird, die Derivatisierung mit dem Derivatisierungsagens nicht erfolgen muss.

2. LCST-Polymere nach Anspruch 1, **dadurch gekennzeichnet, dass** die Derivatisierung der Struktureinheit aus den Comonomeren B (a) bis (c) durch Umesterung mit Allylalkohol, Hydroxymethylacrylat, Hydroxymethylmethacrylat, Hydroxyethylacrylat, Hydroxyethylmethacrylat oder 3-Amino-1-propanolvinylether erfolgt und/oder durch Reaktion mit den entsprechenden Aminen.

3. LCST-Polymere nach Anspruch 1, **dadurch gekennzeichnet, dass** die Derivatisierung der Struktureinheiten aus dem Comonomer B d) durch Veresterung mit Acrylsäure oder mit Methacrylsäure bzw. durch Umesterung mit C₁-C₁₀-Alkylacrylaten oder -methacrylaten erfolgt.

4. LCST-Polymere nach Anspruch 1, **dadurch gekennzeichnet, dass** die Derivatisierung der Struktureinheit aus dem Comonomer (B) (e) durch Umesterung mit Acrylsäure, Methacrylsäure C₁-C₁₀₋Alkylacrylaten oder -methacrylaten erfolgt.

5. LCST-Polymere nach Anspruch 1, **dadurch gekennzeichnet, dass** die Derivatisierung der Struktureinheit aus dem Comonomer B (g) und/oder (h) oder dessen OH- oder NH-funktionellen Derivaten durch Umsetzung mit (Meth)Acrylsäure erfolgt.

6. LCST-Polymere nach Anspruch 1, **dadurch gekennzeichnet, dass** die Derivatisierung der eine Carbonsäuregruppe umfassenden Struktureinheiten aus dem Comonomer B (a) bis (c) durch Umsetzung mit Glycidyl(meth)acrylat und/oder Allylglycidylether erfolgt.

7. LCST-Polymere nach einem der vorherigen Ansprüchen, **dadurch gekennzeichnet, dass** die Comonomere der Gruppe (B) zumindest teilweise durch Butadien gebildet sind.

8. LCST-Polymere nach Anspruch 1, **dadurch gekennzeichnet, dass** die Derivatisierung der Struktureinheit aus dem Comonomer B (h) durch Umsetzung mit einem ungesättigten Alkohol erfolgt, insbesondere mit Allylalkohol, Hydroxymethylacrylat, Hydroxymethylmethacrylat, Hydroxyethylacrylat, Hydroxyethylmethacrylat oder 3-Amino-1-propanolvinylether.

9. LCST-Polymere nach Anspruch 1, **dadurch gekennzeichnet, dass** die Derivatisierung der Struktureinheit aus dem Comonomer (B) (d) durch Umsetzung mit α,α-Dimethyl-metaisopropenylbenzylisocyanat erfolgt.

10. Verfahren zur Herstellung der LCST-Polymeren nach einem der Ansprüche 1 bis 9, **dadurch gekennzeichnet, dass** man 45,0 bis 99,9 mol-% mindestens eines Monomeren oder Makromonomeren (A) und 0,1 bis 55 Gew.-% eine Comonomeren (B) einer radikalischen Polymerisation unterzieht und das erhaltene Polymer mit einem Derivatisierungsagens derivatisiert, das zumindest eine Gruppe aufweist, die mit einer Gruppe einer aus dem Comonomer (B) hervorgegangenen Wiederholungseinheit unter Ausbildung einer kovalenten Bindung reagieren kann, sowie zumindest eine polymerisierbare Doppelbindung, wobei, sofern das Comonomer der Gruppe (B) zumindest teilweise durch Butadien gebildet wird, die Derivatisierung mit dem Derivatisierungsagens nicht erfolgen muss.

11. Verwendung der LCST-Polymeren nach einem der Ansprüche 1 bis 9 bzw. hergestellt nach Anspruch 10, zur Beschichtung von Partikeln und nicht-partikulären Substratoberflächen.

12. Verwendung nach Anspruch 11, **dadurch gekennzeichnet, dass** man die LCST-Polymeren in einem flüssigen Medium unterhalb der LCST-Temperatur mit den Partikeln bzw. den nicht partikulären Substratoberflächen kontaktiert, die Temperatur bis über die LCST-Temperatur erhöht und die Polymeren über die Doppelbindungen bei dieser oder einer höheren Temperatur auf der Oberfläche der Partikel bzw. auf den nichtpartikulären Substratoberflächen polymerisiert.

13. Partikel bzw. nicht-partikuläre Substratoberflächen, die gemäß Anspruch 11 mit den polymerisierten LCST-Polymeren beschichtet sind.

## Claims

1. An LCST polymer obtainable by free-radical co- or terpolymerization in solution of
A) 45.0 to 99.9 mol% of at least one monomer or macromonomer featuring the structural unit
a) N,N-dialkylacrylamide 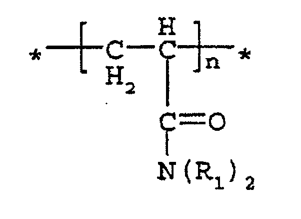 in which n is 1 to 10 000 and R₁ (identical or different at each occurrence) is hydrogen or alkyl groups having 1 to 5 carbon atoms, and the radicals R₁ can also form a ring together with the nitrogen atom;
b) N-vinylcaprolactam 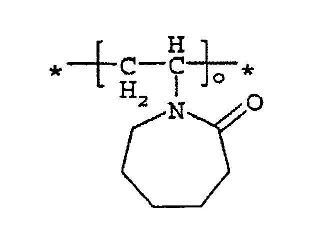 in which o is 1 to 10 000;
c) N-vinylpiperidone 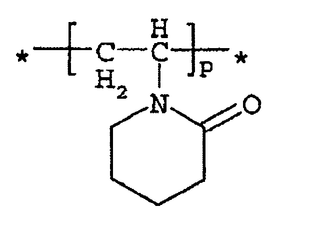 in which p is 1 to 10 000;
d) N-vinylpyrrolidone 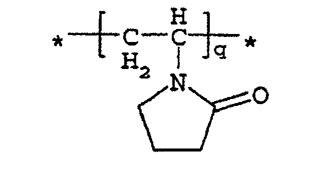 in which q is 1 to 10 000;
e) methyl vinyl ether 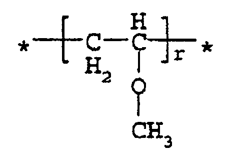 in which r is 1 to 10 000;
f) and/or N-vinyl-alkylamide 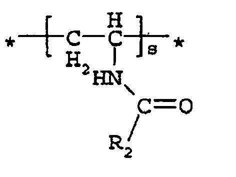 in which s is 1 to 10 000 and R₂ is an (iso)alkyl group having 1 to 5 carbon atoms or a cyclopentyl group;
B) 0.1 to 55.0 mol% of a comonomer from the group of
a) maleic acid, maleic anhydride or an alkyl ester of maleic acid in which the alkyl group contains 1 to 5 carbon atoms;
b) fumaric acid or an alkyl ester of fumaric acid in which the alkyl group contains 1 to 5 carbon atoms;
c) acrylic or methacrylic acid or an alkyl acrylate or methacrylate in which the alkyl group contains 1 to 5 carbon atoms;
d) a hydroxyalkyl acrylate or methacrylate in which the alkyl group contains 1 to 5 carbon atoms;
e) vinyl acetate;
f) glycidyl (meth)acrylate;
g) allyl glycidyl ether; and/or
h) α,α-dimethyl-meta-isopropenylbenzyl isocyanate;
the polymer obtained by copolymerizing the monomers or macromonomers (A) and (B) being derivatized by means of a derivatizing agent containing at least one group which is able to react with a group of a repeating unit originating from the comonomer (B), to form a covalent bond, and also at least one polymerizable double bond, wherein further, if the comonomer of group (B) is formed at least partially by butadiene, derivatization with the derivatizing agent does not have to take place.

2. The LCST polymer of claim 1, **characterized in that** the structural unit formed from the comonomers (B) (a) to (c) is derivatized by transesterification with allyl alcohol, hydroxymethyl acrylate, hydroxymethyl methacrylate, hydroxyethyl acrylate, hydroxyethyl methacrylate or 3-amino-1-propanol vinyl ether and/or by reaction with the corresponding amines.

3. The LCST polymer of claim 1,. **characterized in that** the structural units formed from the comonomer (B) (d) are derivatized by esterification with acrylic acid or with methacrylic acid or by transesterification with C₁-C₁₀ alkyl acrylates or methacrylates.

4. The LCST polymer of claim 1, **characterized in that** the structural unit formed from the comonomer (B) (e) is derivatized by transesterification with acrylic acid, methacrylic acid or C₁-C₁₀ alkyl acrylates or methacrylates.

5. The LCST polymer of claim 1, **characterized in that** the structural unit formed from the comonomer (B) (g) and/or (h) or its OH-functional or NH-functional derivatives is derivatized by reaction with (meth)acrylic acid.

6. The LCST polymer of claim 1, **characterized in that** the structural units formed from the comonomer (B) (a) to (c) and comprising a carboxylic acid group are derivatized by reaction with glycidyl (meth)acrylate and/or allyl glycidyl ether.

7. The LCST polymer of any one of the preceding claims, **characterized in that** the comonomers of group (B) are formed at least in part by butadiene.

8. The LCST polymer of claim 1, **characterized in that** the structural unit formed from the comonomer (B) (h) is derivatized by reaction with an unsaturated alcohol, in particular allyl alcohol, hydroxymethyl acrylate, hydroxymethyl methacrylate, hydroxyethyl acrylate, hydroxyethyl methacrylate or 3-amino-1-propanol vinyl ether.

9. The LCST polymer of claim 1, **characterized in that** the structural unit formed from the comonomer (B) (d) is derivatized by reaction with α,α-dimethyl-meta-isopropenylbenzyl isocyanate.

10. A process for preparing an LCST polymer of any one of claims 1 to 9, **characterized in that** 45.0 to 99.9 mol% of at least one monomer or macromonomer (A) and 0.1% to 55.0% by weight of a comonomer (B) are subjected to a free-radical polymerization and the resulting polymer is derivatized with a derivatizing agent containing at least one group which is able to react with a group of a repeating unit originating from the comonomer (B), to form a covalent bond, and also containing at least one polymerizable double bond, wherein further, if the comonomer of group (B) is formed at least partially by butadiene, derivatization with the derivatizing agent does not have to take place.

11. The use of an LCST polymer of any one of claims 1 to 9 or prepared according to claim 10 to coat particles and nonparticulate substrate surfaces.

12. The use as claimed in claim 11, **characterized in that** the LCST polymer is contacted in a liquid medium at below the LCST temperature with the particles or with the nonparticulate substrate surfaces, the temperature is raised to above the LCST temperature and the polymers are polymerized by the double bonds at this temperature or a higher temperature on the surface of the particles or on the nonparticulate substrate surfaces.

13. Particles or nonparticulate substrate surfaces coated according to claim 11 with the polymerized LCST polymer.

## Revendications

1. Polymères à LCST susceptible d'être obtenus par co- ou terpolymérisation radicalaire en solution de
A) 45,0 à 99,9 % molaire d'au moins un monomère ou un macromonomère ayant le motif constitutif
a) N,N-dialkylacrylamide 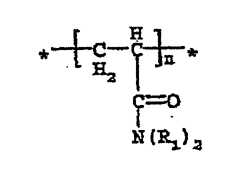 où n signifie 1 à 10 000 et les R₁ (semblables ou différents l'un de l'autre) représentent un hydrogène ou des groupes alkyles ayant 1 à 5 atomes de carbone, les radicaux R₁ pouvant aussi former un cycle conjointement avec l'atome d'azote ;
b) N-vinylcaprolactame 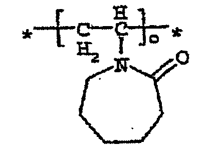 où o signifie 1 à 10 000 ;
c) N-vinylpipéridone 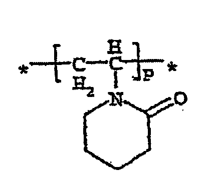 où p signifie 1 à 10 000 ;
d) N-vinylpyrrolidone 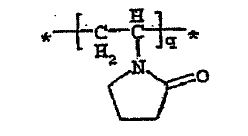 où q signifie 1 à 10 000 ;
e) Ether méthylique vinylique 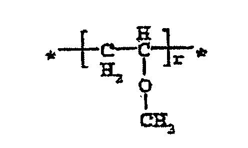 où r signifie 1 à 10 000 ;
f) et/ou N-vinyl-alkylamide 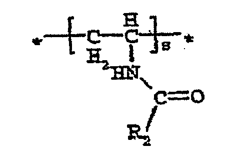 où s signifie 1 à 10 000 et R₂ représente un groupe (iso)alkyle ayant 1 à 5 atomes de carbone ;
B) 0,1 à 55,0 % molaire d'un comonomère du groupe
a) acide maléique, anhydride de l'acide maléique ou d'un ester alkylique de l'acide maléique, où le groupe alkyle comprend 1 à 5 atomes de carbone ;
b) acide fumarique ou d'un ester alkylique de l'acide fumarique, où le groupe alkyle comprend 1 à 5 atomes de carbone ;
c) acide acrylique ou méthacrylique ou d'un acrylate ou méthacrylate d'alkyle, où le groupe alkyle comprend 1 à 5 atomes de carbone ;
d) de l'acrylate ou méthacrylate d'hydroxyalkyle, où le groupe alkyle comprend 1 à 5 atomes de carbone ;
e) acétate de vinyle ;
f) (méth)acrylate de glycidyle ;
g) éther allylglycidique ; et/ou
h) isocyanate de α,α-diméthyl-méta-isopropénylbenzyle ;
i) butadiène ;
le polymère obtenu par copolymérisation des monomères ou macromonomères (A) et (B) étant dérivatisé par un agent de dérivatisation, lequel présente au moins un groupe pouvant réagir avec un groupe d'un motif répétitif provenant du comonomère par formation d'une liaison covalente, ainsi qu'au moins une liaison double polymérisable, la dérivatisation avec l'agent de dérivatisation ne devant pas, en outre, se produire tant que le comonomère du groupe (B) est formé au moins partiellement par du butadiène.

2. Polymères à LCST selon la revendication 1, **caractérisés en ce que** la dérivatisation du motif constitutif composé des comonomères B (a) à (c) se produit par transestérification avec de l'alcool allylique, de l'acrylate d'hydroxyméthyle, du méthacrylate d'hydroxyméthyle, de l'acrylate d'hydroxyéthyle, du méthacrylate d'hydroxyéthyle ou de l'éther vinylique de 3-amino-1-propanol et/ou par réaction avec les amines correspondantes.

3. Polymères à LCST selon la revendication 1, **caractérisés en ce que** la dérivatisation du motif constitutif composé du comonomère B d) se produit par estérification avec de l'acide acrylique ou avec de l'acide méthacrylique et/ou par transestérification avec des acrylates ou méthacrylates d'alkyle en C₁ à C₁₀.

4. Polymères à LCST selon la revendication 1, **caractérisés en ce que** la dérivatisation du motif constitutif composé du comonomère B (e) se produit par transestérification avec de l'acide acrylique, de l'acide méthacrylique, des acrylates ou méthacrylates d'alkyle en C₁ à C₁₀.

5. Polymères à LCST selon la revendication 1, **caractérisés en ce que** la dérivatisation du motif constitutif composé du comonomère B (g) et/ou (h) ou leur dérivés fonctionnels en OH ou en NH se produit par réaction avec de l'acide (méth)acrylique.

6. Polymères à LCST selon la revendication 1, **caractérisés en ce que** la dérivatisation du motif constitutif comprenant un groupe carboxylique composé du comonomère B (a) à (c) se produit par réaction avec du (méth)acrylate de glycidyle et/ou de l'éther allylglycidique.

7. Polymères à LCST selon l'une quelconque des revendications précédentes, **caractérisés en ce que** les comonomères du groupe (B) sont formés au moins partiellement par du butadiène.

8. Polymères à LCST selon la revendication 1, **caractérisés en ce que** la dérivatisation du motif constitutif composé du comonomère B (h) se produit par réaction avec un alcool insaturé, en particulier avec de l'alcool allylique, de l'acrylate d'hydroxyméthyle, du méthacrylate d'hydroxyméthyle, de l'acrylate d'hydroxyéthyle, du méthacrylate d'hydroxyéthyle ou de l'éther vinylique de 3-amino-1-propanol.

9. Polymères à LCST selon la revendication 1, **caractérisés en ce que** la dérivatisation du motif constitutif composé du comonomère B (d) se produit par réaction avec de l'isocyanate de α,α-diméthyl-méta-isopropénylbenzyle.

10. Procédé de fabrication de polymères à LCST selon l'une quelconque des revendications 1 à 9, **caractérisé en ce que** l'on soumet 45,0 à 99,9 % molaire d'au moins un monomère ou macromonomère (A) et 0,1 à 55,0 % molaire d'un comonomère (B) à une polymérisation radicalaire et **en ce que** l'on dérivatise le polymère obtenu avec un agent de dérivatisation qui présente au moins un groupe pouvant réagir avec un groupe d'un motif répétitif provenant du comonomère (B) par formation d'une liaison covalente, ainsi qu'au moins une liaison double polymérisable, la dérivatisation avec l'agent de dérivatisation ne devant pas se produire tant que le comonomère du groupe (B) est formé au moins partiellement par du butadiène.

11. Utilisation de polymères à LCST selon l'une quelconque des revendications 1 à 9 et/ou fabriqués selon la revendication 10, pour le revêtement de particules et de surface de substrats non particulaires.

12. Utilisation selon la revendication 11, **caractérisée en ce que** l'on met en contact les polymères à LCST dans un milieu liquide en dessous de la température LCST avec les particules et/ou les surfaces de substrat non particulaires, **en ce que** l'on augmente la température jusqu'au dessus de la température LCST et **en ce que** l'on polymérise les polymères par la double liaison sur la surface des particules ou sur les surfaces de substrats non particulaires à cette température ou à une température plus élevée.

13. Particules ou surfaces de substrat non particulaires qui sont revêtues selon la revendication 11 avec des polymères à LCST polymérisés.
